(19) Europäisches Patentamt / European Patent Office / Office européen des brevets

(11) **EP 4 653 394 A1**

(12) **EUROPEAN PATENT APPLICATION**
published in accordance with Art. 153(4) EPC

(43) Date of publication:
**26.11.2025 Bulletin 2025/48**

(21) Application number: **24744561.2**

(22) Date of filing: **11.01.2024**

(51) International Patent Classification (IPC):
*C01G 51/00* (2025.01)    *H01M 4/525* (2010.01)

(52) Cooperative Patent Classification (CPC):
**C01G 51/00; H01M 4/525;** Y02E 60/10

(86) International application number:
**PCT/JP2024/000409**

(87) International publication number:
**WO 2024/154638 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2023 JP 2023007253**

(71) Applicant: **Nippon Chemical Industrial Co., Ltd.
Tokyo 136-8515 (JP)**

(72) Inventors:
• **TAKAHASHI Chihiro
Tokyo 136-8515 (JP)**
• **KIKUCHI Masahiro
Tokyo 136-8515 (JP)**

(74) Representative: **Page White Farrer
Bedford House
21a John Street
London WC1N 2BF (GB)**

(54) **LITHIUM COBALT-BASED COMPOSITE OXIDE PARTICLES AND PRODUCTION METHOD THEREFOR**

(57)    Disclosed herein are lithium-cobalt-based composite oxide particles useful as a positive electrode active material for non-aqueous lithium secondary batteries, all-solid-state batteries, and the like. The lithium-cobalt-based composite oxide particles contain lithium-cobalt composite oxide fine particles having an average particle diameter of 0.10 to 2.00 $\mu$m as measured by SEM observation and a water-soluble lithium compound, wherein the water-soluble lithium compound is attached to at least part of particle surfaces of the lithium-cobalt composite oxide fine particles.

Fig. 2

10.0kV x100k SE(U)                    500nm

EP 4 653 394 A1

## Description

Technical Field

The present invention relates to lithium-cobalt-based composite oxide particles useful as a positive electrode material for non-aqueous lithium secondary batteries, all-solid-state batteries, and the like, and methods for producing the same.

Background Art

Non-aqueous lithium secondary batteries are used as power sources for mobile devices, notebook-type personal computers, electric cars, industrial robots, and the like. Further, instead of non-aqueous lithium secondary batteries using an electrolyte containing a flammable organic solvent, all-solid-state batteries using a safer solid electrolyte have actively been developed in recent years.

For example, Patent Literature 1 discloses a method for producing an all-solid-state battery, in which powder materials of a positive electrode layer, a solid electrolyte layer, and a negative electrode layer are turned into pastes, these pastes are applied and dried to prepare green sheets, the green sheets are laminated, and the thus prepared laminate is subjected to a step in which the green sheets are fired at the same time at a temperature of preferably 700 to 1100°C to sinter them.

Therefore, there is demand for a lithium-cobalt-based composite oxide that can be sintered at 700 to 1100°C for use as a positive electrode active material powder for all-solid-state batteries.

As a method for sintering a lithium-cobalt-based composite oxide used as an active material of a positive electrode layer at a relatively low temperature that does not exceed 1000°C, for example, Patent Literature 2 discloses a method in which a formed body containing lithium cobaltate as a positive electrode active material and lithium phosphate as a sintering aid is fired at 900°C for 3 hours to produce a sintered body.

 Patent Literature 1
 Japanese Patent Laid-Open No. 2015-220099
 Patent Literature 2
 Japanese Patent Laid-Open No. 2010-177024

Summary of Invention

Technical Problem

However, it has been desired that when firing is performed at, for example, 900°C or lower, sintering can be achieved at low temperature while a sintering reaction is further promoted.

Recently, non-aqueous lithium secondary batteries and all-solid-state batteries are required to have a lighter weight and a smaller thickness depending on their intended uses. In order to reduce the weight and thickness of a battery, members constituting the battery need to be made smaller in size. For example, reducing the size of a positive electrode material is one of factors to reduce the weight and thickness of a battery.

It is therefore an object of the present invention to provide lithium-cobalt-based composite oxide particles that make it possible to reduce a sintering temperature and improve sinterability and that make it possible to, when used as a positive electrode active material for a non-aqueous lithium secondary battery or an all-solid-state battery, reduce the weight and thickness of a positive electrode material and a method for producing the same.

Solution to Problem

In light of the above circumstances, the present inventor has intensively studied and, as a result, has found that a reduction in sintering temperature and an improvement in sinterability can be achieved by lithium-cobalt-based composite oxide particles obtained by attaching a water-soluble lithium compound to at least part of particle surfaces of lithium-cobalt composite oxide fine particles having an average particle diameter of 0.10 to 2.00 $\mu$m as measured by SEM observation and that when such lithium-cobalt-based composite oxide particles are used as a positive electrode active material for a non-aqueous lithium secondary battery or an all-solid-state battery, the weight and thickness of a positive electrode material can be reduced. This finding has led to the completion of the present invention.

Specifically, the present invention (1) provides lithium-cobalt-based composite oxide particles containing: lithium-cobalt composite oxide fine particles having an average particle diameter of 0.10 to 2.00 $\mu$m as measured by SEM observation; and a water-soluble lithium compound, wherein

the water-soluble lithium compound is attached to at least part of particle surfaces of the lithium-cobalt composite oxide fine particles.

The present invention (2) provides the lithium-cobalt-based composite oxide particles according to (1), wherein the water-soluble lithium compound is lithium hydroxide.

The present invention (3) provides the lithium-cobalt-based composite oxide particles according to (1) or (2), wherein
a content of the water-soluble lithium compound in terms of lithium atom content is 0.01 to 10.0 mass% relative to the lithium-cobalt composite oxide fine particles.

The present invention (4) provides the lithium-cobalt-based composite oxide particles according to (1) or (2), wherein
the composite oxide particles have an average particle diameter of 0.10 to 2.50 $\mu$m as measured by SEM observation.

The present invention (5) provides the lithium-cobalt-based composite oxide particles according to (1) or (2), wherein
the composite oxide particles have a BET specific surface area of 2.0 $m^2$/g or more.

The present invention (6) provides the lithium-cobalt-based composite oxide particles according to (1) or (2), wherein
the lithium-cobalt composite oxide fine particles show a weight loss on heating at 850°C of 1.5 mass% or less.

The present invention (7) provides a method for producing lithium-cobalt-based composite oxide particles, the method including a surface treatment step in which an aqueous slurry containing lithium-cobalt composite oxide fine particles having an average particle diameter of 0.10 to 2.00 $\mu$m as measured by SEM observation and a water-soluble lithium compound is prepared, and the aqueous slurry is subjected to spray drying treatment.

The present invention (8) provides the method for producing lithium-cobalt-based composite oxide particles according to (7), wherein
the lithium-cobalt composite oxide fine particles are obtained by performing a step including a raw material mixture preparing step in which a raw material mixture containing at least a lithium compound and a cobalt compound having an average particle diameter of 0.05 to 1.00 $\mu$m as measured by SEM observation is prepared, and a final firing step in which the raw material mixture is fired at 500 to 850°C.

The present invention (9) provides the method for producing lithium-cobalt-based composite oxide particles according to (7), wherein the water-soluble lithium compound is lithium hydroxide.

The present invention (10) provides the method for producing lithium-cobalt-based composite oxide particles according to (7) or (8), wherein
the aqueous slurry is prepared by adding the water-soluble lithium compound and the lithium-cobalt composite oxide fine particles in such a manner that a content of the water-soluble lithium compound in terms of lithium atom content is 0.01 to 10.0 mass% in terms of relative to the lithium-cobalt composite oxide fine particles.

Advantageous Effect of invention

According to the present invention, it is possible to provide lithium-cobalt-based composite oxide particles that make it possible to reduce a sintering temperature and improve sinterability and that make it possible to, when used as a positive electrode active material for a non-aqueous lithium secondary battery or an all-solid-state battery, reduce the weight and thickness of a positive electrode material and a method for producing the same.

Brief Description of Drawings

[Figure 1] Figure 1 is an SEM image of lithium-cobalt-based composite oxide particles obtained in Reference Example 1.
[Figure 2] Figure 2 is an SEM image of lithium-cobalt-based composite oxide particles obtained in Example 1.

Description of Embodiments

Hereinbelow, the present invention will be described on the basis of preferred embodiments.

Lithium-cobalt-based composite oxide particles of the present invention contain lithium-cobalt composite oxide fine particles and a water-soluble lithium compound, wherein the water-soluble lithium compound is attached to at least part of particle surfaces of the lithium-cobalt composite oxide fine particles.

It should be noted that in the lithium-cobalt-based composite oxide particles of the present invention, the attached water-soluble lithium compound may evenly and continuously cover the entire particle surfaces of the lithium-cobalt composite oxide fine particles or may cover only part of particle surfaces of the lithium-cobalt composite oxide fine particles. In the former case, the lithium-cobalt-based composite oxide particles are in a state where the entire particle surfaces of the lithium-cobalt composite oxide fine particles are completely covered with the water-soluble lithium compound so that the particle surfaces of the lithium-cobalt composite oxide fine particles are not exposed. In the latter case, the particle surfaces of the lithium-cobalt-based composite oxide particles include a region formed of the lithium-cobalt composite oxide fine particles as a base and a region formed of the water-soluble lithium compound. When the water-soluble lithium compound covers only part of particle surfaces of the lithium-cobalt composite oxide fine particles, the covering may be continuous, discontinuous in a sea-island state, or a combination of both.

The lithium-cobalt composite oxide fine particles in the lithium-cobalt-based composite oxide particles of the present invention are particles formed of a composite oxide containing at least lithium and cobalt.

The lithium-cobalt composite oxide fine particles in the lithium-cobalt-based composite oxide particles of the present invention are constituted from fine primary particles of a lithium cobalt composite oxide, secondary particles as aggregates of fine primary particles of a lithium-cobalt composite oxide, or a mixture of fine primary particles of a lithium-cobalt composite oxide and secondary particles as aggregates of the fine primary particles.

The average particle diameter of the lithium-cobalt composite oxide fine particles in the lithium-cobalt-based composite oxide particles of the present invention as measured by SEM observation is 0.10 to 2.00 $\mu$m, preferably 0.10 to 1.00 $\mu$m. When the average particle diameter of the lithium-cobalt composite oxide fine particles as measured by SEM observation is within the above range, sintering at low temperature can be achieved while a sintering reaction is further promoted, and the use of the lithium-cobalt-based composite oxide particles of the present invention as a positive electrode active material for a non-aqueous lithium secondary battery or an all-solid-state battery makes it possible to reduce the weight and thickness of a positive electrode material.

It should be noted that the average particle diameter of the lithium-cobalt composite oxide fine particles in the lithium-cobalt-based composite oxide particles of the present invention as measured by SEM observation refers to the average particle diameter of primary particles determined from a photograph taken by a scanning electron microscope (SEM). Specifically, 100 fine primary particles of a lithium-cobalt composite oxide are randomly selected under observation with a scanning electron microscope (SEM), the horizontal Feret's diameter of each of the particles is measured, and the average of horizontal Feret's diameters of the 100 particles is determined as an average particle diameter.

The volume-based 50% particle diameter (D50) of the lithium-cobalt composite oxide fine particles in the lithium cobalt-based composite oxide particles of the present invention as measured by laser diffraction/scattering using water as a measurement solvent is 0.10 to 2.00 $\mu$m, preferably 0.20 to 1.00 $\mu$m. When the D50 of the lithium-cobalt composite oxide fine particles is within the above range, a synergistic effect with the water-soluble lithium compound present on the particle surfaces of the lithium-cobalt composite oxide fine particles by being attached thereto makes it possible to, when the lithium-cobalt-based composite oxide particles of the present invention are fired at 900°C or lower, achieve sintering at low temperature while further promoting a sintering reaction, and the weight and thickness of a positive electrode material are likely to be reduced so that the size of a battery is likely to be reduced. On the other hand, if the D50 of the lithium-cobalt composite oxide fine particles is less than the above range, the resultant positive electrode active material particles are difficult to handle as a powder, and in addition, there is a high possibility that a problem will occur during production of a positive electrode material. Further, if the D50 of the lithium-cobalt composite oxide fine particles exceeds the above range, it is difficult to, when the lithium-cobalt-based composite oxide particles of the present invention are fired at 900°C or lower, achieve sintering at low temperature while further promoting a sintering reaction, and the resultant positive electrode active material particles become coarse, which makes it difficult to reduce the thickness of a positive electrode.

The atomic mole ratio of Li to Co (Li/Co) in the lithium-cobalt composite oxide fine particles in the lithium-cobalt-based composite oxide particles of the present invention is preferably 0.90 to 1.20, particularly preferably 0.95 to 1.15. When the atomic mole ratio of Li to Co (Li/Co) in the lithium-cobalt composite oxide fine particles is within the above range, the energy density of a positive electrode active material is increased.

The lithium-cobalt composite oxide fine particles in the lithium-cobalt-based composite oxide particles of the present invention may optionally contain an M element for the purpose of improving performance or physical properties. The M element is one or more metallic elements selected from among Mg, Al, Ti, Zr, Cu, Fe, Sr, Ca, V, Mo, Bi, Nb, Si, Zn, Ga, Ge, Sn, Ba, W, Na, K, Ni, and Mn.

The atomic mole percentage of the M element to Co ((M/Co) $\times$ 100) in the lithium-cobalt composite oxide fine particles in the lithium-cobalt-based composite oxide particles of the present invention is preferably 0.01 to 5.00 mol%, particularly preferably 0.05 to 2.00 mol%. When the lithium-cobalt composite oxide fine particles contain the M element and the atomic mole percentage of the M element to Co ((M/Co) $\times$ 100) in the lithium-cobalt composite oxide fine particles is within the above range, battery characteristics can be improved without impairing a charge-discharge capacity. It should be noted that when the lithium-cobalt composite oxide fine particles contain two or more M elements, the number of atomic moles of the M element as a base for calculating the mole percentage refers to the total number of atomic moles of the respective M elements.

When the lithium-cobalt composite oxide fine particles in the lithium-cobalt-based composite oxide particles of the present invention contain the M element, the M element may be present inside the lithium-cobalt composite oxide fine particles, or may be present on the particle surfaces of the lithium-cobalt composite oxide fine particles, or may be present both inside and on the surfaces of the lithium-cobalt composite oxide fine particles.

When the M element is present on the particle surfaces of the lithium-cobalt composite oxide fine particles in the lithium-cobalt-based composite oxide particles of the present invention, the M element may be present in the form of an oxide, a composite oxide, a sulfate, a phosphate, or the like.

Preferably, the weight loss on heating at 850°C of the lithium-cobalt composite oxide fine particles in the lithium-cobalt-based composite oxide particles of the present invention is preferably 1.5 mass% or less, more preferably 1.0 mass% or less, particularly preferably 0.5 mass% or less.

When lithium-cobalt composite oxide fine particles are produced, grain growth during firing can be suppressed by lowering a firing temperature, but if the firing temperature is excessively lowered to attempt to suppress grain growth too much, raw materials do not sufficiently react. Further, if lithium-cobalt composite oxide fine particles obtained by such a poor reaction between raw materials are used, a problem occurs due to unreacted raw materials during production of a positive electrode material, and in addition, a charge-discharge capacity expected of the lithium-cobalt-based composite oxide is reduced.

In the present invention, when the weight loss on heating at 850°C of the lithium-cobalt composite oxide fine particles is within the above range, such problems can be prevented.

It should be noted that in the present invention, the weight loss on heating at 850°C is calculated by the following formula.

$$\text{Weight loss (\%)} = ((X - Y)/X) \times 100$$

X represents the mass (g) of the lithium-cobalt composite oxide fine particles before heating at 850°C.

Y represents the mass (g) of the lithium-cobalt composite oxide fine particles heated to 850°C at a temperature rise rate of 100°C/h, maintained at 850°C for 5 hours after reaching 850°C, and then naturally cooled to room temperature.

The BET specific surface area of the lithium-cobalt composite oxide fine particles in the lithium-cobalt-based composite oxide particles of the present invention is preferably 2.0 $m^2$/g or more, particularly preferably 3.0 to 15.0 $m^2$/g. When the BET specific surface area of the lithium-cobalt composite oxide fine particles is within the above range, sintering can be achieved at low temperature while a sintering reaction is further promoted, and the weight and thickness of a positive electrode material are likely to be reduced so that the size of a battery is likely to be reduced.

The water-soluble lithium compound in the lithium-cobalt-based composite oxide particles of the present invention refers to a lithium compound whose solubility in water is 5 g/100 mL or more. The solubility of the water-soluble lithium compound in water is preferably 10 g/100 mL or more. Examples of the water-soluble lithium compound include lithium hydroxide, lithium citrate, lithium acetate, lithium nitrate, lithium chloride, lithium bromide, lithium sulfate, and lithium iodide, and preferred are lithium hydroxide and lithium nitrate. The water-soluble lithium compound is more preferably lithium hydroxide because lithium hydroxide is easily dissolved and is easily attached to the surfaces of the lithium-cobalt composite oxide fine particles, and sinterability during sintering at low temperature can be improved.

The content of the water-soluble lithium compound in the lithium-cobalt-based composite oxide particles of the present invention in terms of lithium atom content is 0.01 to 10.0 mass%, preferably 0.05 to 5.0 mass% relative to the lithium-cobalt composite oxide fine particles. The content of the water-soluble lithium compound within the above range is preferred from the viewpoint that sintering can be achieved at a lower temperature.

The lithium-cobalt-based composite oxide particles of the present invention are particles in which the lithium-cobalt composite oxide fine particles, to at least part of particle surfaces of which the water-soluble lithium compound is attached, are combined with the water-soluble lithium compound.

The average particle diameter of the lithium-cobalt-based composite oxide particles of the present invention as measured by SEM observation refers to the average particle diameter of particles in which the lithium-cobalt composite oxide fine particles, to at least part of particle surfaces of which the water-soluble lithium compound is attached, are combined with the water-soluble lithium compound as measured by SEM observation.

The average particle diameter of the lithium-cobalt-based composite oxide particles of the present invention as measured by SEM observation is 0.10 to 2.50 $\mu$m, preferably 0.10 to 1.50 $\mu$m. When the average particle diameter of the lithium-cobalt-based composite oxide particles as measured by SEM observation is within the above range, sintering can be achieved at low temperature while a sintering reaction is further promoted, and the weight and thickness of a positive electrode material are likely to be reduced so that the size of a battery is likely to be reduced.

It should be noted that the average particle diameter of the lithium-cobalt-based composite oxide particles of the present invention as measured by SEM observation refers to an average particle diameter determined from a photograph taken by a scanning electron microscope (SEM). Specifically, 100 particles in which the lithium-cobalt composite oxide fine particles are combined with the water-soluble lithium compound are randomly selected under observation with a scanning electron microscope (SEM), the horizontal Feret's diameter of each of the particles is measured, and the average of horizontal Feret's diameters of the 100 particles is determined as an average particle diameter.

The BET specific surface area of the lithium-cobalt-based composite oxide particles of the present invention is 2.0 m²/g or more, particularly preferably 3.0 to 15.0 m²/g. When the BET specific surface area of the lithium-cobalt-based composite oxide particles is within the above range, sintering can be achieved at low temperature while a sintering reaction is further promoted, and the weight and thickness of a positive electrode material are likely to be reduced so that the size of a battery is likely to be reduced.

A temperature required to sinter the lithium-cobalt-based composite oxide particles of the present invention is 900°C or lower, preferably 700 to 800°C.

A known method for producing an all-solid-state battery used in most cases is, for example, a method in which powder materials of a positive electrode layer, a solid electrolyte layer, and a negative electrode layer are turned into pastes, these pastes are applied and dried to prepare green sheets, the green sheets are laminated, and the thus prepared laminate is subjected to a sintering step in which these green sheets are fired at the same time at a temperature of preferably 700 to 1100°C, preferably 900°C or lower to sinter them (see, for example, paragraphs 0017 to 0022 in Japanese Patent Laid-Open No. 2015-220099, paragraphs 0017 to 0022 in Japanese Patent Laid-Open No. 2015-220106, and paragraphs 0088 to 0106 in WO2019/181909).

At this time, the positive electrode layer needs to be formed of a dense positive electrode active material to improve lithium-ion conductivity, and therefore there is demand for a positive electrode active material powder whose primary particles are fine and which can easily be sintered at 900°C or lower.

The lithium-cobalt-based composite oxide particles of the present invention can be sintered at a low temperature of 900°C or lower, preferably 700 to 800°C, and are therefore particularly useful as a positive electrode active material powder for all-solid-state batteries. For example, when an all-solid-state battery is produced by preparing a laminate from a positive electrode layer, a solid electrolyte layer, and a negative electrode layer and firing these layers of the laminate at the same time, the lithium-cobalt-based composite oxide particles of the present invention are useful because it is possible to prevent an undesired reaction in which, for example, impurities are generated between the positive electrode layer and the solid electrolyte layer.

The lithium-cobalt-based composite oxide particles of the present invention are suitable for use as a positive electrode active material for non-aqueous lithium secondary batteries, all-solid-state batteries, and the like.

A method for producing lithium-cobalt-based composite oxide particles of the present invention includes a surface treatment step that will be described below. The method for producing lithium-cobalt-based composite oxide particles of the present invention may include step A that will be described below.

Surface treatment step: a water-soluble lithium compound is attached to the particle surfaces of lithium-cobalt-based composite oxide fine particles having an average particle diameter of 0.10 to 2.00 μm as measured by SEM observation.

Step A: lithium-cobalt composite oxide fine particles having an average particle diameter of 0.10 to 2.00 μm as measured by SEM observation are prepared.

An object to which a water-soluble lithium compound is to be attached in the surface treatment step in the method for producing lithium-cobalt-based composite oxide particles of the present invention is lithium-cobalt-based composite oxide fine particles having an average particle diameter of 0.10 to 2.00 μm as measured by SEM observation.

A method for obtaining lithium-cobalt-based composite oxide fine particles having an average particle diameter of 0.10 to 2.00 μm as measured by SEM observation for use in the surface treatment step in the method for producing lithium-cobalt-based composite oxide particles of the present invention is not limited, but is preferably a method including step A that will be described below.

The step A includes a raw material mixture preparing step in which a raw material mixture containing at least a lithium compound and a cobalt compound having an average particle diameter of 0.05 to 1.00 μm as measured by SEM observation is prepared, and a final firing step in which the raw material mixture obtained in the raw material mixture preparing step is fired at 500 to 850°C. The lithium-cobalt composite oxide fine particles are preferably produced through the step A from the viewpoint that sintering can be achieved at low temperature while a sintering reaction is further promoted, and the weight and thickness of a positive electrode material are likely to be reduced so that the size of a battery is likely to be reduced.

In the raw material mixture preparing step in the step A, a raw material mixture containing at least a lithium compound and a cobalt compound is prepared.

The lithium compound used in the raw material mixture preparing step is not limited as long as it is a lithium compound used as a raw material for producing lithium-cobalt composite oxide fine particles, and examples thereof include an oxide, a hydroxide, a carbonate, a nitrate, a sulfate, and an organic acid salt of lithium.

The average particle diameter of the lithium compound used in the raw material mixture preparing step is not limited. The lithium compound may be a generally-available one. For example, one having a particle diameter of 1 to 100 μm is generally available.

The cobalt compound used in the raw material mixture preparing step is not limited as long as it is a cobalt compound used as a raw material for producing a lithium-cobalt-based composite oxide, and examples thereof include an oxide, an oxyhydroxide, a hydroxide, a carbonate, a nitrate, a sulfate, and an organic acid salt of cobalt.

The average particle diameter of the cobalt compound used in the raw material mixture preparing step is preferably 0.05 to 1.00 μm, particularly preferably 0.10 to 0.50 μm as measured by SEM observation. When the average particle diameter of the cobalt compound as measured by SEM observation is within the above range, it is possible to obtain lithium-cobalt composite oxide fine particles having an average particle diameter of 0.10 to 2.00 μm, preferably 0.10 to 1.00 μm as measured by SEM observation.

It should be noted that the average particle diameter of the cobalt compound used in the raw material mixture preparing step as measured by SEM observation refers to the average particle diameter of primary particles determined from a photograph taken by a scanning electron microscope (SEM). Specifically, 100 primary particles are randomly selected under observation with a scanning electron microscope (SEM), the horizontal Feret's diameter of each of the particles is measured, and the average of horizontal Feret's diameters of the 100 particles is determined as an average particle diameter.

In the raw material mixture preparing step, the content ratio between the lithium compound and the cobalt compound in the raw material mixture is set so that the ratio of the number of atomic moles of Li to the number of atomic moles of Co (Li/Co mole ratio) is preferably 0.90 to 1.20, particularly preferably 0.95 to 1.15. When the content ratio between the lithium compound and the cobalt compound in the raw material mixture is within the above range, a lithium-cobalt composite oxide fine particles having a single phase are likely to be obtained.

In the raw material mixture preparing step, the raw material mixture may optionally contain a compound containing an M element. Examples of the compound containing an M element include an oxide, a hydroxide, a carbonate, a nitrate, a sulfate, a fluoride, and an organic acid salt which contain an M element. The compound containing an M element may be a compound containing two or more M elements. Examples of the M element include Mg, Al, Ti, Zr, Cu, Fe, Sr, Ca, V, Mo, Bi, Nb, Si, Zn, Ga, Ge, Sn, Ba, W, Na, K, Ni, and Mn.

It should be noted that the lithium compound, the cobalt compound, and the compound containing an M element as raw materials are not limited by their production history, but their impurity contents are preferably as low as possible to obtain high-purity lithium-cobalt composite oxide fine particles.

In the raw material mixture preparing step, the lithium compound, the cobalt compound, and the M element-containing compound optionally used are mixed to prepare a raw material mixture. At this time, the cobalt compound is allowed to be present so that the average diameter of the cobalt compound in the raw material mixture as measured by SEM observation is preferably 0.05 to 1.00 μm, particularly preferably 0.10 to 0.50 μm, and the lithium compound and the M element-containing compound optionally used are mixed by treatment such as stirring or pulverization. Such mixing makes it easy to bring the lithium compound, the cobalt compound, and the M element-containing compound optionally used into contact with each other. When the average diameter of the cobalt compound in the raw material mixture as measured by SEM observation is within the above range, the reactivity of raw materials in the final firing step can be increased, and therefore the reaction sufficiently proceeds even when the raw material mixture is fired at a low temperature of 500 to 850°C. This makes it possible to obtain, through the final firing step, lithium-cobalt composite oxide fine particles whose weight loss on heating at 850°C is 1.5 mass% or less, preferably 1.0 mass% or less, particularly preferably 0.5 mass% or less. A method for mixing the lithium compound, the cobalt compound, and the M element-containing compound optionally used may either be dry or wet.

A method for preparing the raw material mixture is not limited, and examples thereof include: a method (i) in which the cobalt compound is subjected to pulverizing treatment to adjust its particle diameter before the cobalt compound, the lithium compound, and the M element-containing compound optionally used are mixed, and then the cobalt compound subjected to pulverizing treatment, the lithium compound, and the M element-containing compound optionally used are mixed; a method (ii) in which the cobalt compound is subjected to pulverizing treatment and the lithium compound and/or the M element-containing compound are/is subjected to pulverizing treatment before the cobalt compound, the lithium compound, and the M element-containing compound optionally used are mixed, and then the cobalt compound, the lithium compound, and the M element-containing compound optionally used subjected to pulverizing treatment are mixed; and a method (iii) in which the cobalt compound, the lithium compound, and the M element-containing compound optionally used are mixed and the resultant is subjected to mixing and pulverizing treatment. The pulverizing treatment of the cobalt compound, the lithium compound, or the M element-containing compound and the mixing and pulverizing treatment of the cobalt compound, the lithium compound, and the M element-containing compound optionally used may either be dry or wet.

When cobalt hydroxide is used as a cobalt compound in the raw material mixture preparing step, the raw material mixture may be prepared by, for example, a method in which cobalt hydroxide, the lithium compound, and the M element-containing compound optionally used are subjected to mixing and pulverizing treatment to prepare a raw material mixture whose average particle diameter of cobalt hydroxide as measured by SEM observation is 0.05 to 1.00 μm, particularly preferably 0.10 to 0.50 μm. Generally, single particles of cobalt hydroxide have a small particle diameter, and therefore even when cobalt hydroxide is not previously subjected to pulverizing treatment to adjust its particle diameter to be smaller, a raw material mixture having an average particle diameter within the above range as measured by SEM observation can be obtained by subjecting cobalt hydroxide to mixing and pulverizing treatment together with the lithium compound and the M element-containing compound optionally used.

Examples of a device for performing dry pulverizing treatment or mixing and pulverizing treatment include a jet mill, a pin mill, a roll mill, a ball mill, and a bead mill. Examples of a device for performing wet pulverizing treatment or mixing and pulverizing treatment include a ball mill and a bead mill.

When prepared by a wet method, the raw material mixture is preferably dried. As a drying method, an ordinary method is used. When wet pulverizing treatment is performed, for example, a method using a spray drier can be used.

In the A process, the final firing step is a step in which a raw material mixture obtained by performing the raw material mixture preparing step is fired to obtain lithium-cobalt composite oxide fine particles.

A firing temperature in the final firing step is 500 to 850°C, preferably 550 to 830°C. When the firing temperature in the final firing step is within the above range, it is possible to obtain lithium-cobalt composite oxide fine particles whose average primary particle diameter as measured by SEM observation is 0.10 to 2.00 $\mu$m, preferably 0.10 to 1.00 $\mu$m and whose weight loss on heating at 850°C is 1.5 mass% or less, preferably 1.0 mass% or less, particularly preferably 0.5 mass% or less. On the other hand, if the firing temperature in the final firing step is lower than the above range, it is not possible to obtain lithium-cobalt composite oxide fine particles showing a weight loss on heating at 850°C of 1.5 mass% or less, and if the firing temperature in the final firing step exceeds the above range, the lithium-cobalt composite oxide fine particles become coarse, and therefore when the resultant lithium-cobalt-based composite oxide particles are used as a positive electrode active material for a non-aqueous lithium secondary battery or an all-solid-state battery, it is difficult to reduce the thickness of a positive electrode material.

Further, it is particularly preferred that the firing temperature in the final firing step is 500 to 850°C, preferably 550 to 830°C from the viewpoint of obtaining lithium-cobalt composite oxide fine particles whose average particle diameter as measured by SEM observation is 0.10 to 2.00, preferably 0.10 to 1.00 $\mu$m and weight loss on heating at 850°C is 1.5 mass% or less and which does not have an impurity phase other than a hexagonal crystal phase (R-3m) derived from the lithium-cobalt composite oxide fine particles.

A firing time in the final firing step is 1 to 30 hours, preferably 5 to 20 hours. A firing atmosphere in the final firing step is an oxidative atmosphere such as air or oxygen gas. In the final firing step, a fired product obtained by first firing may be fired more than once, if necessary.

In the step A, a preliminary firing step, in which a raw material mixture obtained by performing the raw material mixture preparing step is preliminarily fired at 250 to 400°C, may optionally be performed between the raw material mixture preparing step and the final firing step for the purpose of efficiently removing a decomposition gas generated from the raw material mixture. A preliminary firing temperature in the preliminary firing step is 250 to 400°C, preferably 280 to 380°C. A preliminary firing time in the preliminary firing step is 1 to 10 hours, preferably 2 to 5 hours.

In the A process, a pulverizing treatment step, in which lithium-cobalt composite oxide fine particles obtained by performing the final firing step are subjected to pulverizing treatment, may optionally be performed.

The pulverizing treatment in the pulverizing treatment step may either be dry pulverizing treatment or wet pulverizing treatment. Examples of a wet pulverizing device include a ball mill and a bead mill. Examples of a dry pulverizing device include publicly-known pulverizing devices such as a jet mill, a pin mill, a roll mill, a ball mill, and a bead mill.

By performing the step A in this way, lithium-cobalt composite oxide fine particles to be used in the surface treatment step described below, that is, lithium-cobalt composite oxide fine particles having an average particle diameter of 0.10 to 2.00 $\mu$m as measured by SEM observation are obtained.

In the surface treatment step in the method for producing lithium-cobalt-based composite oxide particles of the present invention, an aqueous slurry containing lithium-cobalt composite oxide fine particles having an average particle diameter of 0.10 to 2.00 $\mu$m as measured by SEM observation, e.g., lithium-cobalt composite oxide fine particles obtained by performing the step A described above and a water-soluble lithium compound is prepared, and the aqueous slurry is spray-dried so that the water-soluble lithium compound is attached to at least part of particle surfaces of the lithium-cobalt composite oxide fine particles. The method for producing lithium-cobalt-based composite oxide particles of the present invention preferably includes such a surface treatment step from the viewpoint that the water-soluble lithium compound can evenly and tightly be attached to the particle surfaces of the lithium-cobalt composite oxide fine particles.

The water-soluble lithium compound used in the surface treatment step refers to a lithium compound whose solubility in water is 5 g/100 mL or more. Examples of such a water-soluble lithium compound include lithium hydroxide, lithium citrate, lithium acetate, lithium nitrate, lithium chloride, lithium bromide, lithium sulfate, and lithium iodide. Preferred are lithium hydroxide and lithium nitrate. The water-soluble lithium compound is more preferably lithium hydroxide because lithium hydroxide is easily dissolved and easily attached to the surfaces of the lithium-cobalt composite oxide fine particles, and sinterability during sintering at low temperature can be improved.

In the surface treatment step, an aqueous slurry is prepared by adding, to an aqueous solvent such as water, lithium-cobalt composite oxide fine particles and a water-soluble lithium compound in such a manner that the content of the water-soluble lithium compound in terms of lithium atom content is 0.01 to 10.0 mass%, preferably 0.05 to 5.0 mass% relative to the lithium-cobalt composite oxide fine particles. The amount of the water-soluble lithium compound added within the above range is preferred from the viewpoint that a sintering reaction can further be promoted so that sintering can be achieved at low temperature.

The solid content concentration of the aqueous slurry is 5 to 60 mass%, preferably 10 to 50 mass%, which is preferred from the viewpoint that the aqueous slurry can easily be prepared, and in addition, the subsequent drying step can be performed without load.

For the purpose of evenly dispersing solid matter, the aqueous slurry containing lithium-cobalt composite oxide fine particles and a water-soluble lithium compound may be subjected to mixing treatment using a device such as a ball mill, a stirring machine using a stirring blade, a bead mill, a stirrer, a triple roll mill, a Disper mill, homogenizer, a vibration mill, a sand grind mill, an attritor mill, or a powerful stirring machine for the preparation of the aqueous slurry.

A drying temperature in a spray drying device is adjusted to 100 to 400°C, preferably 110 to 350°C, which is preferred from the viewpoint of preventing a powder from absorbing moisture to easily collect the powder.

In the method for producing lithium-cobalt-based composite oxide particles of the present invention, lithium-cobalt-based composite oxide particles obtained by performing the surface treatment step may optionally be subjected to treatment such as disintegration, pulverization, or classification after the surface treatment step.

The treatment such as disintegration, pulverization, or classification after the surface treatment step may be performed in a dry manner or in a wet manner. However, from the viewpoint of preventing the elution of the water-soluble lithium compound in the surface treatment step, the treatment is preferably performed in a dry manner. Examples of a device for performing disintegration, pulverization, or classification in a dry manner include a jet mill, a pin mill, a roll mill, a ball mill, and a bead mill. Examples of a device for performing disintegration, pulverization, or classification in a dry manner include a ball mill and a bead mill.

By performing the method for producing lithium-cobalt-based composite oxide particles of the present invention in this way, lithium-cobalt-based composite oxide particles are obtained. The lithium-cobalt-based composite oxide particles obtained by performing the method for producing lithium-cobalt-based composite oxide particles of the present invention can be sintered at a low temperature of 900°C or lower, preferably 700 to 800°C, and are therefore particularly useful as a positive electrode active material powder for all-solid-state batteries. Further, the lithium-cobalt-based composite oxide particles of the present invention are fine particles, and are therefore useful as a positive electrode active material for non-aqueous lithium secondary batteries or all-solid-state batteries because the weight and thickness of a positive electrode material can be reduced.

Examples

Hereinbelow, the present invention will be described in more detail with reference to examples, but the present invention is not limited to these examples.

<Fine lithium-cobalt composite oxide particles>

(1) Weight loss on heating at 850°C

Weight loss on heating at 850°C was determined by the following formula.

$$\text{Weight loss (\%) = ((X - Y) / X) × 100}$$

X: The mass (g) of fine lithium-cobalt composite oxide particles before heating at 850°C
Y: The mass (g) of fine lithium-cobalt composite oxide particles heated to 850°C at a temperature rise rate of 100°C/h, maintained at 850°C for 5 hours after reaching 850°C, and then naturally cooled to room temperature.

(2) Specific surface area of lithium-cobalt composite oxide fine particles

The specific surface area of lithium-cobalt composite oxide fine particles was determined by a BET method.

(3) Average particle diameter of lithium-cobalt composite oxide fine particles as measured by SEM observation

One hundred lithium-cobalt composite oxide fine primary particles were randomly selected under observation with a scanning electron microscope (SEM), the horizontal Feret's diameter of each of the particles was measured, and the average of horizontal Feret's diameters of the 100 particles was determined as an average particle diameter.

(4) D50 of lithium-cobalt composite oxide fine particles

The particle size distribution of lithium-cobalt composite oxide fine particles was measured by laser diffraction/-scattering using water as a measurement solvent, and a volume-based 50% particle diameter was determined from the obtained particle size distribution.

(5) Average particle diameters of lithium compound and cobalt compound in raw material mixture as measured by SEM observation

One hundred primary particles were randomly selected under observation with a scanning electron microscope (SEM), and the horizontal Feret's diameter of each of the particles was measured, and the average of horizontal Feret's diameters of the 100 particles was determined as an average particle diameter.

(6) Crystal phase

A crystal phase was measured by an X-ray diffractometer (manufactured by Rigaku Corporation, Ultima IV) using Cu-K$\alpha$ rays as a radiation source.

(Reference Example 1)

(Raw material mixture preparing step)

Cobalt hydroxide (average particle diameter as measured by SEM observation: 0.18 $\mu$m) and lithium carbonate (average particle diameter as measured by SEM observation: 7.0 $\mu$m) were weighed so that a Li/Co ratio was 1.00 and were then subjected to dry mixing and pulverizing treatment in a commercially-available table mixer to obtain 10.5 g of a raw material mixture.

(Preliminary firing step, Final firing step)

The obtained raw material mixture was preliminarily fired at 300°C for 3 hours, and then the resultant was finally fired at 700°C for 5 hours to obtain lithium-cobalt composite oxide fine particles. The obtained lithium-cobalt composite oxide particles were subjected to disintegrating treatment in the table mixer for 30 seconds to obtain lithium-cobalt composite oxide fine particles.

(Pulverizing treatment step)

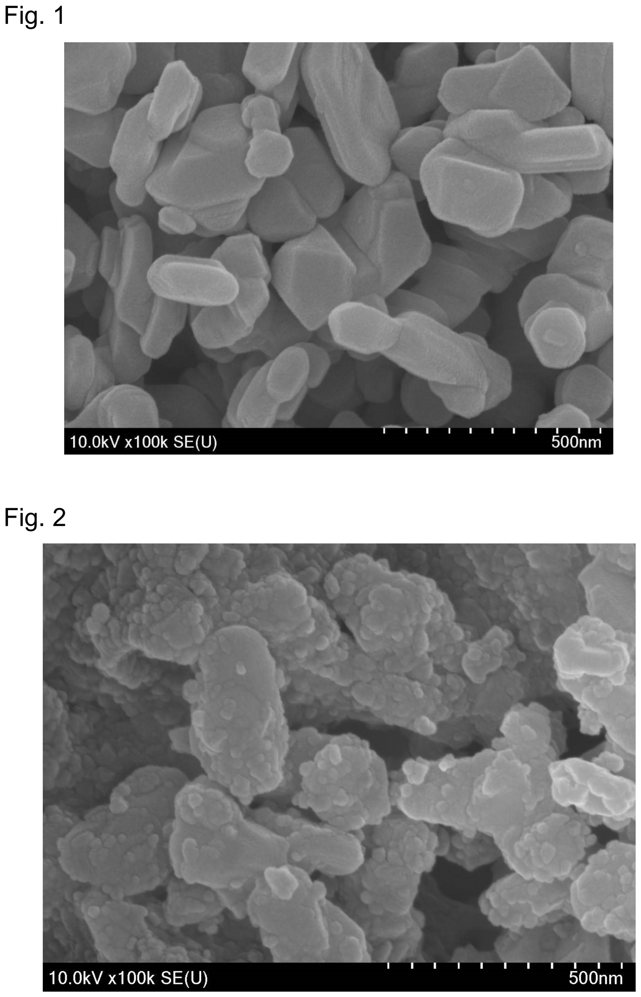

The obtained lithium-cobalt composite oxide fine particles were subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt composite oxide fine particles. Various physical properties of the obtained lithium-cobalt composite oxide fine particles are shown in Table 1. Further, the obtained lithium-cobalt composite oxide fine particles were subjected to X-ray diffraction analysis, and as a result, an impurity phase other than a hexagonal crystal phase (R-3m) derived from a lithium-cobalt-based composite oxide was not observed. The SEM photograph of the obtained lithium-cobalt composite oxide fine particles is shown in Figure 1.

[Table 1]

| | Average particle diameter of cobalt compound in raw material mixture as measured by SEM observation (μm) | Physical Properties of lithium-cobalt composite oxide fine particles | | | |
| --- | --- | --- | --- | --- | --- |
| | | BET specific surface area (m²/g) | Average particle diameter as measured by SEM observation (μm) | D50 (μm) | Weight loss on heating at 850°C (%) |
| Reference Example 1 | 0.18 | 8.1 | 0.25 | 0.39 | 0.3 |

<Lithium-cobalt-based composite oxide particles>

(1) Average particle diameters of water-soluble lithium compound, lithium carbonate, lithium-cobalt-based composite oxide particles, and lithium-cobalt composite oxide fine particles as measured by SEM observation

One hundred primary particles or one hundred particles in which lithium-cobalt composite oxide fine particles were combined with a water-soluble lithium compound were randomly selected under observation with a scanning electron microscope (SEM), the horizontal Feret's diameter of each of the particles was measured, and the average of horizontal Feret's diameters of the 100 particles was determined as an average particle diameter.

(2) Sintering test

First, 0.5 g of lithium-cobalt composite oxide fine particles or 0.5 g of lithium-cobalt-based composite oxide particles were pressed into a $\phi$ 15 mm circular thin plate at a pressure of 5 kN/cm² to obtain a compact. The obtained compact was fired at 700°C or 800°C for 5 hours to obtain a sintered body. The volume density of the sintered body was calculated from the weight, thickness, and diameter of the sintered body.
Further, a sintered body was obtained separately by firing at 900°C for 5 hours to determine an increase or decrease from the volume density of the sintered body at 800°C to confirm a sintering temperature.

(Example 1)

(Raw material mixture preparing step, preliminary firing step, final firing step, pulverizing treatment step)

Lithium-cobalt composite oxide fine particles were obtained in the same manner as in Reference Example 1.

(Surface treatment step)

The obtained lithium-cobalt composite oxide fine particles, lithium hydroxide (average particle diameter as measured by SEM observation: 25 μm), and pure water were blended in such a manner that the content of lithium hydroxide in terms of lithium atom content was 2 mass% relative to the lithium-cobalt composite oxide fine particles and that a slurry concentration was 20 mass%, and the resultant was stirred to obtain an aqueous slurry. The obtained aqueous slurry was spray-dried at a feed rate of 60 g/min with the use of a spray drier (manufactured by OHKAWARA KAKOHKI CO., LTD., L-8) whose inlet temperature was set to 250°C and outlet temperature was set to 120°C to obtain a dry powder.
The obtained dry powder was subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt-based composite oxide particles having an average particle diameter of 0.30 μm as measured by SEM observation. The SEM image of the obtained lithium-cobalt-based composite oxide particles is shown in Figure 2. Figure 2 confirmed that lithium hydroxide was attached to part of particle surfaces of the lithium-cobalt composite oxide fine particles.

(Reference Example 2)

(Raw material mixture preparing step, preliminary firing step, final firing step, pulverizing treatment step)

Lithium-cobalt composite oxide fine particles were obtained in the same manner as in Reference Example 1.

(Surface treatment step)

The obtained lithium-cobalt composite oxide fine particles, lithium carbonate (average particle diameter as measured by SEM observation: 7.0 $\mu$m), and pure water were blended in such a manner that the content of lithium carbonate in terms of lithium atom content was 2 mass% relative to the lithium-cobalt composite oxide fine particles and that a slurry concentration was 20 mass%, and the resultant was stirred to obtain an aqueous slurry. The obtained aqueous slurry was spray-dried at a feed rate of 60 g/min with the use of a spray drier (manufactured by OHKAWARA KAKOHKI CO., LTD., L-8) whose inlet temperature was set to 250°C and outlet temperature was set to 120°C to obtain a dry powder.
The obtained dry powder was subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt-based composite oxide particles. The obtained lithium-cobalt-based composite oxide particles were subjected to SEM observation, and as a result, it was confirmed that lithium carbonate did not cover the surfaces of the lithium-cobalt composite oxide fine particles, and lithium carbonate particles were present separately from the lithium-cobalt composite oxide fine particles.

(Sintering test)

The sintering test was performed using the lithium-cobalt-based composite oxide particles obtained in Example 1 to calculate the volume densities of sintered bodies. The results are shown in Table 2. There was little change in volume density between the sintered body at 800°C and the sintered body at 900°C, and therefore the sintering temperature was confirmed to be 800°C.
The same sintering test was performed using the lithium-cobalt composite oxide fine particles obtained in Reference Example 1 to calculate the volume densities of sintered bodies. The results are also shown in Table 2. There was a change in volume density between the sintered body at 800°C and the sintered body at 900°C, and therefore the sintering temperature was confirmed to be 900°C or higher.
The same sintering test was performed using the lithium-cobalt-based composite oxide particles obtained in Reference Example 2 to calculate the volume densities of sintered bodies. The results are also shown in Table 2. There was little change in volume density between the sintered body at 800°C and the sintered body at 900°C, and therefore the sintering temperature was confirmed to be 800°C.

(Relative density)

The relative density shown in Table 2 is a relative value determined by taking a theoretical density of 5.1 g/cm$^3$ of a lithium-cobalt composite oxide particle composition as 100%.

[Table 2]

| | Example 1 | Reference Example 1 | Reference Example 2 |
|---|---|---|---|
| Lithium compound | LiOH | - | Li$_2$CO$_3$ |
| Average particle diameter [1] ($\mu$m) | 0.30 | 0.25 | - |
| Volume density (g/cm$^3$) | | | |
| **Before** firing[2] | 2.36 | 2.39 | 2.41 |
| Sintered body sintered at 700°C | 4.08 | 2.46 | 3.76 |
| Sintered body sintered at 800°C | 4.37 | 2.83 | 4.25 |
| Sintering temperature | 800°C | 900°C or higher | 800°C |
| Relative density (%) | | | |
| Before sintering[3] | 46.3 | 47.0 | 47.3 |
| Sintered body sintered at 700°C | 80.0 | 48.3 | 73.7 |

(continued)

|  | Example 1 | Reference Example 1 | Reference Example 2 |
|---|---|---|---|
| Sintered body sintered at 800°C | 85.7 | 55.6 | 83.3 |

1) Average particle diameter of lithium-cobalt composite oxide fine particles or lithium-cobalt-based composite oxide particles as measured by SEM observation
2) Volume density before sintering at 700°C or 800°C
3) Relative density before sintering at 700°C or 800°C

The results shown in Table 2 confirmed that the lithium-cobalt-based composite oxide particles obtained in Example 1 could be sintered even at a low temperature of about 800°C because there was little difference in volume density between the volume density at 900°C and the volume density at 800°C. Further, the sintered body obtained by firing the lithium-cobalt-based composite oxide particles obtained in Example 1 at 700°C was higher in volume density than the sintered body obtained by firing the lithium-cobalt composite oxide fine particles obtained in Reference Example 1 at 700°C. The same result was obtained also in the case of firing at 800°C. This confirmed that when the lithium-cobalt-based composite oxide particles in which lithium hydroxide as a water-soluble lithium compound was attached to the particle surfaces of the lithium-cobalt-based composite oxide fine particles were fired, a sintering reaction was further promoted so that sinterability was improved.

It was confirmed that the lithium-cobalt-based composite oxide particles obtained in Reference Example 2 could be sintered even at a low temperature of about 800°C because there was little difference between the volume density at 900°C and the volume density at 800°C. Further, the sintered body obtained by firing the lithium-cobalt-based composite oxide particles obtained in Example 1 at 700°C was higher in volume density than the sintered body obtained by firing the lithium-cobalt composite oxide fine particles obtained in Reference Example 2 at 700°C. The same result was obtained also in the case of firing at 800°C. This confirmed that when the lithium-cobalt-based composite oxide particles in which lithium hydroxide as a water-soluble lithium compound was attached to the particle surfaces of the lithium-cobalt-based composite oxide fine particles were fired, a sintering reaction was further promoted so that sinterability was improved.

**Claims**

1. Lithium-cobalt-based composite oxide particles comprising: lithium-cobalt composite oxide fine particles having an average particle diameter of 0.10 to 2.00 $\mu$m as measured by SEM observation; and a water-soluble lithium compound, wherein
   the water-soluble lithium compound is attached to at least part of particle surfaces of the lithium-cobalt composite oxide fine particles.

2. The lithium-cobalt-based composite oxide particles according to claim 1, wherein
   the water-soluble lithium compound is lithium hydroxide.

3. The lithium-cobalt-based composite oxide particles according to claim 1 or 2, wherein
   a content of the water-soluble lithium compound in terms of lithium atom content is 0.01 to 10.0 mass% relative to the lithium-cobalt composite oxide fine particles.

4. The lithium-cobalt-based composite oxide particles according to claim 1 or 2, wherein
   the composite oxide particles have an average particle diameter of 0.10 to 2.50 $\mu$m as measured by SEM observation.

5. The lithium-cobalt-based composite oxide particles according to claim 1 or 2, wherein
   the composite oxide particles have a BET specific surface area of 2.0 $m^2$/g or more.

6. The lithium-cobalt-based composite oxide particles according to claim 1 or 2, wherein
   the lithium-cobalt composite oxide fine particles show a weight loss on heating at 850°C of 1.5 mass% or less.

7. A method for producing lithium-cobalt-based composite oxide particles, the method comprising a surface treatment step in which an aqueous slurry containing lithium-cobalt composite oxide fine particles having an average particle diameter of 0.10 to 2.00 $\mu$m as measured by SEM observation and a water-soluble lithium compound is prepared, and the aqueous slurry is subjected to spray drying treatment.

8. The method for producing lithium-cobalt-based composite oxide particles according to claim 7, wherein the lithium-cobalt composite oxide fine particles are obtained by performing a step including a raw material mixture preparing step in which a raw material mixture containing at least a lithium compound and a cobalt compound having an average particle diameter of 0.05 to 1.00 $\mu$m as measured by SEM observation is prepared, and a final firing step in which the raw material mixture is fired at 500 to 850°C.

9. The method for producing lithium-cobalt-based composite oxide particles according to claim 7, wherein the water-soluble lithium compound is lithium hydroxide.

10. The method for producing lithium-cobalt-based composite oxide particles according to claim 7 or 8, wherein the aqueous slurry is prepared by adding the water-soluble lithium compound and the lithium-cobalt composite oxide fine particles in such a manner that a content of the water-soluble lithium compound in terms of lithium atom content is 0.01 to 10.0 mass% relative to the lithium-cobalt composite oxide fine particles.

Fig. 1

Fig. 2

## INTERNATIONAL SEARCH REPORT

| International application No. |
|---|
| **PCT/JP2024/000409** |

| A. | CLASSIFICATION OF SUBJECT MATTER |
|---|---|

*C01G 51/00*(2006.01)i; *H01M 4/525*(2010.01)i
FI:   C01G51/00 A; H01M4/525

According to International Patent Classification (IPC) or to both national classification and IPC

| B. | FIELDS SEARCHED |
|---|---|

Minimum documentation searched (classification system followed by classification symbols)

C01G51/00; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2018-45802 A (SUMITOMO METAL MINING CO., LTD.) 22 March 2018 (2018-03-22) claims, paragraph [0033], examples | 1-6 |
| X | JP 2013-191579 A (NISSAN MOTOR CO., LTD.) 26 September 2013 (2013-09-26) claims, examples | 1-6 |
| X | JP 2006-73482 A (NISSAN MOTOR CO., LTD.) 16 March 2006 (2006-03-16) claims, examples | 1-6 |
| X | JP 2019-506703 A (TODA AMERICA, INC.) 07 March 2019 (2019-03-07) claims, paragraph [0084], examples | 1-4, 6 |
| X | WO 2018/003439 A1 (PANASONIC INTELLECTUAL PROPERTY MANAGEMENT CO., LTD.) 04 January 2018 (2018-01-04) claims, paragraph [0022], examples | 1-4, 6 |
| X | JP 2010-80394 A (SUMITOMO METAL MINING CO., LTD.) 08 April 2010 (2010-04-08) claims, examples | 1, 3-6 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/000409** |

### C. DOCUMENTS CONSIDERED TO BE RELEVANT

| Category* | Citation of document, with indication, where appropriate, of the relevant passages | Relevant to claim No. |
| --- | --- | --- |
| X | CN 106099059 A (NINGDE AMPEREX TECHNOLOGY LTD.) 09 November 2016 (2016-11-09) <br> claims, examples | 1, 3-6 |
| A | JP 2019-140092 A (SUMITOMO METAL MINING CO., LTD.) 22 August 2019 (2019-08-22) <br> entire text, all drawings | 1-10 |

Form PCT/ISA/210 (second sheet) (July 2022)

## INTERNATIONAL SEARCH REPORT
### Information on patent family members

International application No.

**PCT/JP2024/000409**

| Patent document cited in search report | | | Publication date (day/month/year) | Patent family member(s) | | | Publication date (day/month/year) |
|---|---|---|---|---|---|---|---|
| JP | 2018-45802 | A | 22 March 2018 | US claims, examples | 2020/0127287 | A1 | |
| | | | | WO | 2018/052038 | A1 | |
| | | | | EP | 3514867 | A1 | |
| | | | | CN | 109997260 | A | |
| JP | 2013-191579 | A | 26 September 2013 | (Family: none) | | | |
| JP | 2006-73482 | A | 16 March 2006 | WO claims, examples | 2006/027925 | A2 | |
| JP | 2019-506703 | A | 07 March 2019 | US claims, examples | 2017/0207455 | A1 | |
| | | | | WO | 2017/123836 | A1 | |
| | | | | EP | 3402750 | A1 | |
| | | | | KR | 10-2018-0121484 | A | |
| | | | | CN | 109071266 | A | |
| WO | 2018/003439 | A1 | 04 January 2018 | US claims, examples | 2019/0312274 | A1 | |
| | | | | CN | 109314237 | A | |
| JP | 2010-80394 | A | 08 April 2010 | (Family: none) | | | |
| CN | 106099059 | A | 09 November 2016 | (Family: none) | | | |
| JP | 2019-140092 | A | 22 August 2019 | (Family: none) | | | |

Form PCT/ISA/210 (patent family annex) (July 2022)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015220099 A
- JP 2010177024 A
- JP 2015220106 A
- WO 2019181909 A